(19) Europäisches Patentamt
European Patent Office
Office européen des brevets

(11) **EP 2 120 027 A1**

(12) **EUROPÄISCHE PATENTANMELDUNG**

(43) Veröffentlichungstag:
**18.11.2009 Patentblatt 2009/47**

(51) Int Cl.:
*G01J 3/50* *(2006.01)*    *G01J 3/52* *(2006.01)*

(21) Anmeldenummer: **09006582.2**

(22) Anmeldetag: **15.05.2009**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **17.05.2008 DE 102008024005**

(71) Anmelder: **Basiccolor GmbH**
**82377 Penzberg (DE)**

(72) Erfinder: **Koch, Karl**
**82377 Penzberg (DE)**

(74) Vertreter: **Horns, Axel H.**
**Mittermayrstrasse 18**
**80796 München (DE)**

(54) **Colorimeter und Verfahren zum Kalibrieren eines Colorimeters**

(57)    Offenbart ist ein Verfahren zum Kalibrieren eines ersten Colorimeters für die Messung eines Satzes von Farbwiedergabekennwerten eines Farbmonitors oder Farbprojektors mit folgenden Schritten: Festlegen einer ein Einzelgerät identifizierenden eindeutigen Farbmonitor- oder Farbprojektoridentifikation und meßtechnisches Bestimmen des Initialsatzes von Farbwiedergabekennwerten am im wesentlichen fabrikneuen Farbmonitor oder Farbprojektor unter Verwendung des zweiten Colorimeters; Speichern der eindeutigen Farbmonitor- oder Farbprojektoridentifikation und des Initialsatzes von Farbwiedergabekennwerten in der Speichereinrichtung des Farbmonitors oder Farbprojektors; meßtechnisches Bestimmen des Satzes von Farbwiedergabekennwerten am im wesentlichen fabrikneuen Farbmonitor oder Farbprojektor unter Verwendung des ersten Colorimeters Auslesen der eindeutigen Farbmonitor- oder Farbprojektoridentifikation und des Initialsatzes von Farbwiedergabekennwerten aus der Speichereinrichtung des Farbmonitors oder Farbprojektors durch das erste Colorimeter, Vergleichen des am im wesentlichen fabrikneuen Farbmonitor oder Farbprojektor unter Verwendung des ersten Colorimeters meßtechnisch bestimmten Satzes von Farbwiedergabekennwerten mit dem Initialsatz von Farbwiedergabekennwerten aus der Speichereinrichtung des Farbmonitors oder Farbprojektors und Bestimmen eines Satzes von Kalibrationskorrekturparametern für das erste Colorimeter, wobei der Satz von Kalibrationskorrekturparametern den am im wesentlichen fabrikneuen Farbmonitor oder Farbprojektor unter Verwendung des ersten Colorimeters meßtechnisch bestimmten Satz von Farbwiedergabekennwerten in den Initialsatz von Farbwiedergabekennwerten aus der Speichereinrichtung des Farbmonitors oder Farbprojektors zu transformieren vermag und Speichern der eindeutigen Farbmonitor- oder Farbprojektoridentifikation aus der Speichereinrichtung des Farbmonitors oder Farbprojektors und des zugehörigen Satzes von Kalibrationskorrekturparametern für das erste Colorimeter in der Speichereinrichtung des ersten Colorimeters. Offenbart ist ferner ein entsprechendes Colorimeter.

EP 2 120 027 A1

**Beschreibung**

Die Erfindung betrifft ein Colorimeter sowie ein Verfahren zum Kalibrieren eines Colorimeters. Insbesondere betrifft die Erfindung ein Colorimeter sowie ein Verfahren zum Kalibrieren eines Colorimeters für die Messung eines Satzes von Farbwiedergabekennwerten eines Farbmonitors oder Farbprojektors.

Hintergrund und Stand der Technik

LCD- und CRT-Monitoren oder -Projektoren unterliegen wie andere technische Geräte auch einem Lebenszyklus. Bestimmte Kennwerte verändern sich im Laufe der Nutzungszeit allmählich gegenüber einem unmittelbar nach Abschluß des Herstellungsprozesses vorhandenen Ausgangswert (sogenannter "fabrikneuer" Zustand, d.h. die Betriebsdauer ist gleich Null oder im Vergleich zur üblichen Lebensdauer klein, so daß davon ausgegangen werden kann, daß noch keinerlei relevante Veränderungen der Kennwerte eingetreten sind). Es ist insbesondere bekannt, daß die Farbwiedergabe von LCD- und CRT-Monitoren oder -Projektoren zum Beispiel aufgrund von Fertigungstoleranzen und/oder Alterungsprozessen Abweichungen und/oder zeitlichen Veränderungen gegenüber einem Sollzustand unterworfen sein kann. Bekannt ist ebenfalls, die tatsächliche Farbwiedergabecharakteristik eines Monitors oder Projektors durch Anwenden eines kalibrieren Meßgerätes (Colorimeter) meßtechnisch zu bestimmen, um beispielsweise bei der Ansteuerung des Monitors oder des Projektors durch einen Computer rechnerisch entsprechende Korrekturen vornehmen zu können, welche die durch Abweichungen der Ist-Farbwiedergabecharakteristik des Monitors oder Projektors gegenüber einer erwünschten Soll-Farbwiedergabecharakteristik bewirkten Farbabweichungen ausgleicht oder zumindest reduziert. Diese Korrekturen können beispielsweise durch die Treibersoftware vorgenommen werden, die das Video-Interface des Monitors oder Projektors steuert.
Ein Colorimeter zum Messen und Kalibrieren der Farbcharakteristika von Monitoren oder Projektoren ist aus der Druckschrift US 6,816,262 B1 bekannt.

Einige Hersteller von Monitoren oder Projektoren sind inzwischen dazu übergegangen, bestimmte Farbwidergabecharakteristika von Monitoren oder Projektoren im Werk unmittelbar nach Abschluß des Fertigungsprozesses mit einem geeigneten Colorimeter meßtechnisch zu erfassen und die Meßergebnisse für jeden einzelnen Monitor beziehungsweise Projektor individuell in einem nichtflüchtigen Speicher abzuspeichern, der beispielsweise Bestandteil der Ansteuerelektronik des jeweiligen Monitors oder Projektors ist. Bei manchen Anbietern kann der Inhalt dieses nichtflüchtigen Speichers über ein geeignetes elektronisches Interface des Monitors beziehungsweise des Projektors ausgelesen werden. In einem besonders nutzerfreundlichen Fall kann der Inhalt des nichtflüchtigen Speichers über das Video-Ansteuerungs-Interface des Monitors ausgelesen werden, so daß die Treibersoftware, die das Video-Interface des Monitors steuert, den Inhalt des nichtflüchtigen Speichers auslesen und zur Farbkorrektur der Ansteuerung heranziehen kann. In einer einfacheren Version kann der Inhalt des nichtflüchtigen Speichers auf andere Weise ausgelesen werden, beispielsweise durch eine zahlenmäßige Darstellung von Meßwerten auf dem Display des Monitors. Ein Benutzer muß in diesem Fall die angezeigten Werte auslesen und manuell zum Beispiel in die Treibersoftware eingeben. Auch sind Fälle bekannt, bei denen die vom Hersteller ermittelten Meßwerte zu den Farbcharakteristika eines Monitors oder Projektors lediglich auf einem Beipackzettel mitgeliefert werden. Auch in einem derartigen Fall muß der Benutzer die angegebenen Werte auslesen und manuell zum Beispiel in die Treibersoftware eingeben.
Durch die vorstehend beschriebene Praxis ist es möglich, durch den Fertigungsprozeß bedingte Streuungen bestimmter Farbwidergabecharakteristika von Monitoren oder Projektoren auf der Basis des Geräteneuzustandes beim Endanwender zu korrigieren.
Leider verändern sich jedoch Farbwidergabecharakteristika von Monitoren oder Projektoren im Laufe der Betriebsdauer, so daß die vom Hersteller mitgelieferten Meßwerte nach einer gewissen Zeit nicht mehr dafür geeignet sind, um beispielsweise bei der Ansteuerung des Monitors durch einen Computer rechnerisch entsprechende Korrekturen vornehmen zu können, welche die durch Abweichungen der Ist-Farbwiedergabecharakteristik des Monitors oder Projektors gegenüber einer erwünschten Soll-Farbwiedergabecharakteristik bewirkten Farbabweichungen ausgleicht oder zumindest reduziert. Bei einem signifikante Zeit in Benutzung gewesenen Monitor oder Projektor kommt der Endanwender nicht umhin, die relevanten Farbwidergabecharakteristika erneut zu vermessen oder vermessen zu lassen.
Bei Herstellern von Monitoren oder Projektoren eingesetzte genaue und präzise kalibrierte Referenz-Colorimeter sind jedoch komplex, nicht einfach zu bedienen und vor allem kostenaufwendig. Messgeräte, die mit allen spektralen Charakteristiken aller Monitorarten richtige Messergebnisse liefern sollen, müssen spektral messen, d.h. In der Wellenlänge alle 1-2 nm einen Emissionswert ermitteln. Dies ergibt bei ca. 300 nm sichtbarer Wellenlängen mindestens 150 einzelne Messwerte.
Kostengünstige Messgeräte, die auch im Endanwenderbereich eingesetzt werden, sind sog. Colorimeter oder Dreibereichs-Messgeräte, die ganze Wellenlängenbereiche im roten, grünen und blauen Farbspektrum gleichzeitig messen. Diese Messgeräte sind auf einen Referenz- oder Durchschnittsmonitor kalibriert und liefern nur für diesen Monitortyp perfekte, für alle anderen Monitortypen suboptimale Messwerte.

Das Einsenden von gealterten Monitoren oder Projektoren an den Hersteller oder an andere Meßdienstleister zwecks Neuvermessung der Farbwiedergabecharakteristika erscheint wenig praktikabel, da umständlich und teuer. Am Markt verfügbare kostengünstigere Colorimeter sind jedoch nicht ohne Weiteres in derselben Weise auf vorgegebene absolute Primär-Standards kalibrierbar wie die beispielsweise bei den Herstellern eingesetzten Referenzgeräte (Referenz-Colorimeter).

Es besteht daher ein Bedarf, alterungsbedingte Veränderungen der Farbwiedergabecharakteristika von Monitoren oder Projektoren insbesondere beim Endanwender auf eine einfachere und kostengünstigere Art meßtechnisch zu erfassen.

Die Erfindung in Kürze

Die erfindungsgemäße Lösung dieses Problems ist in den Ansprüchen 1, 6 und 14 angegeben. Den abhängigen Ansprüchen sind vorteilhafte Weiterbildungen entnehmbar.

Wenn beispielsweise der Endanwender einen im wesentliche fabrikneuen Farbmonitor oder -Projektor in Betrieb nimmt und mit einem nicht auf einen vorgegebenen Primär-Standard präzise kalibrierten Colorimeter, welches aber kostengünstiger ist und leichter zu bedienen sein kann, eine Messung der Farbwidergabecharakteristika des im wesentlichen fabrikneuen Monitors durchführt, wird er häufig zu numerischen Ergebnissen gelangen, die von denjenigen abweichen, die der Hersteller mit seinem genau auf einen Primär-Standard kalibrierten Referenz-Colorimeter erhalten hat. Unter der Annahme, daß sich das Farbwidergabeverhalten des im wesentlichen fabrikneuen Monitors seit der Messung beim Hersteller nicht verändert hat, können die mit dem nicht genau kalibrierten (Sekundär-)Colorimeter erhaltenen numerischen Meßwerte aufgefaßt werden als eine Transformation derjenigen Meßwerte, die der Hersteller mit dem Referenz-Colorimeter bestimmt hat.

Durch die Erfindung wird der Umstand zu Nutze gemacht, diese Transformation mathematisch zu beschreiben (z.B. durch eine Korrekturmatrix), und es wird dadurch möglich, durch Vergleich der numerischen Meßwerte der Referenz-Messung des Herstellers mit denjenigen der Sekundär-Messung beim Anwender bestimmte Korrekturparameter zu ermitteln, die es ermöglichen, das kostengünstigere Sekundär-Meßgerät beim Anwender einer nachgelagerten Kalibrierung mit den vom Hersteller ermittelten Referenzwerten als Sekundär-Standard zu unterziehen.

Durch die Nutzung der vom Hersteller dem Monitor oder Projektor mitgegebenen Referenz-Meßwerte als Sekundär-Standard kann eines oder mehrere Sekundär-Colorimeter auf den individuellen Farbmonitor oder -Projektor hin kalibriert werden.

Danach kann ein auf die erfindungsgemäße Weise nachkalibriertes Sekundär-Colorimeter über den weiteren Lebenszyklus des Farbmonitors oder -Projektors, auf den die Sekundär-Kalibrierung hin erfolgt ist, hinweg eingesetzt werden, um alterungsbedingte Veränderungen der Farbwiedergabecharakteristika des individuellen Farbmonitors beziehungsweise -Projektors mit hoher Genauigkeit meßtechnisch zu verfolgen. Die auf diese Weise erfaßten alterungsbedingten Veränderungen der Farbwiedergabecharakteristika des individuellen Farbmonitors beziehungsweise -Projektors können dann bei der Ansteuerung des betreffenden Gerätes zur Festlegung von Korrekturen herangezogen werden.

Dem Fachmann sind verschiedene Gestaltungsmöglichkeiten für Colorimeter bekannt, die zur meßtechnischen Bestimmung von Farbwiedergabekennwerten von Farbmonitoren oder -Projektoren herangezogen werden können. Eine Übersicht findet sich beispielsweise in dem Papier von Lianza, Tom: "Techniques and Applications for High-Quality, Low-Cost, Embedded Color Mesaurement of CRTs" [veröffentlicht in: Proceedings of SPIE -- Volume 2658, Color Imaging: Device-Independent Color, Color Hard Copy, and Graphic Arts, Jan Bares, Editor, March 1996, pp. 161-181] Insbesondere wird unterschieden zwischen

- Einzelelement-Breitbandsensoren,
- Photometrischen Einzelelementsensoren,
- Tricolor-Sensoren,
- Trichromatischen Colorimetern, und
- Spektrometern.

Allen diesen Architekturen gemeinsam ist, daß die von einem Farbmonitor oder -Projektor emittierten Lichtwellen mit einem oder mehreren Farbfiltern gefiltert werden, bevor die Intensität des gefilterten Lichtes von einer beziehungsweise mehreren lichtempfindlichen Meßzellen meßtechnisch erfaßt wird. Diese Farbfilter können in einem einfachen und kostengünstigen Fall aus farbig eingefärbten Folien bestehen. Bei einem Spektrometer wird dagegen beispielsweise durch Beugung an einem Beugungsgitter eine Farbfilterfunktion realisiert. Alle Filter weisen eine spezifische Durchlaßkurve auf, die angibt, wie sich ihre Absorptions- beziehungsweise Durchlaßeigenschaften in Abhängigkeit von der Wellenlänge verhalten.

Normalerweise wird bei der meßtechnischen Bestimmung von Farbwiedergabekennwerten eines Farbmonitors oder -Projektors die von diesem emittierte komplexe spektrale Komposition des Lichtes entweder parallel oder zeitlich nacheinander durch auf unterschiedliche Wellenlängenbereiche abgestimmte Filter gefiltert und jeweils die nach der Filterung resultierende Lichtintensität meßtechnisch erfaßt.

Wird die komplexe spektrale Komposition des von einem Farbmonitor oder -Projektor emittierten Lichtes durch verschiedene Filtersysteme mit unterschiedlichen Absorptions- beziehungsweise Durchlaßeigenschaften in unterschiedlichen Colorimetern bewertet, treten Differenzen zwischen den ermittelten Farbwiedergabekennwerten auf. Solche Differenzen hängen in der Regel auch davon ab, mit welchen Mechanismen der jeweilige farbmonitor oder -Projektor das Farbbild erzeugt: Bei Röhrenmonitoren können in unterschiedlichen Geräten eingesetzte verschiedene Leuchtphosphore mit differierenden Spektralverteilungen dazu führen, daß die Differenz von mit zwei unterschiedlichen Colorimetern gemessenen Farbwidergabekennwerten sich als vom Monitortyp abhängig erweist. Ähnliches gilt bei unterschiedlichen Typen von LCD-Farbmonitoren mit unterschiedlichen darin verbauten Farbfilterfolien.

Eine Kalibrierung eines Colorimeters hängt daher in der Regel insbesondere sowohl von der Spektralverteilung der Lichtquelle im Farbmonitor oder -Projektor als auch von der Spektralantwort der Filter- oder Detektiersysteme im Colorimeter ab.

Ausführungsbeispiel

Um ein Sekundär-Colorimeter mit einer ersten Spektralantwort der Filter- oder Detektiersysteme für einen gegebenen individuellen Farbmonitor- oder Projektor auf ein Referenzcolorimeter mit einer differierenden zweiten Spektralantwort der Filter- oder Detektiersystemezu kalibrieren, werden in einem Ausführungsbeispiel der Erfindung die Differenzen in den Messwerten der Primärfarben des Monitors, Rot, Grün und Blau, bei einer bestimmten Farbansteuerung des Farbmonitors ermittelt und durch eine geeignete Korrekturmatrix $\|K\|$ (3x3) im XYZ-Farbsystem korrigiert. Die Matrix $\|K\|$ ist für jede Kombination aus Monitor/Projektor einerseits und Sekundär-Colorimeter (Messgerät) individuell zu ermitteln:

$$\|K\| = \begin{bmatrix} K_{11} & K_{12} & K_{13} \\ K_{21} & K_{22} & K_{23} \\ K_{31} & K_{32} & K_{33} \end{bmatrix} \tag{1}$$

Es gelten im folgenden die unten angegebenen Notationen:

$$\begin{bmatrix} X_{S1} \\ Y_{S1} \\ Z_{S1} \end{bmatrix}$$ Im Speicher des Farbmonitors abgespeicherter Referenz-Meßwert aus Referenz-Messung der ersten Primärvalenz (z.B. Rot), dargestellt im XYZ-System

$$\begin{bmatrix} X_{S2} \\ Y_{S2} \\ Z_{S2} \end{bmatrix}$$ Im Speicher des Farbmonitors abgespeicherter Referenz-Meßwert aus Referenz-Messung der zweiten Primärvalenz (z.B. Grün), dargestellt im XYZ-System

$$\begin{bmatrix} X_{S3} \\ Y_{S3} \\ Z_{S3} \end{bmatrix}$$ Im Speicher des Farbmonitors abgespeicherter Referenz-Meßwert aus Referenz-Messung der dritten Primärvalenz (z.B. Blau), dargestellt im XYZ-System

$$\begin{bmatrix} X_{M1} \\ Y_{M1} \\ Z_{M1} \end{bmatrix}$$ Meßwert aus Messung der ersten Primärvalenz (z.B. Rot) mit Sekundär-Colorimeter am im wesentlichen fabrikneuen Farbmonitor, dargestellt im XYZ-System

$$\begin{bmatrix} X_{M2} \\ Y_{M2} \\ Z_{M2} \end{bmatrix}$$ Meßwert aus Messung der zweiten Primärvalenz (z.B. Grün) mit Sekundär-Colorimeter am im wesentlichen fabrikneuen Farbmonitor, dargestellt im XYZ-System

$$\begin{bmatrix} X_{M3} \\ Y_{M3} \\ Z_{M3} \end{bmatrix}$$ Meßwert aus Messung der ersten Primärvalenz (z.B. Blau) mit Sekundär-Colorimeter am im wesentlichen fabrikneuen Farbmonitor, dargestellt im XYZ-System

Aus der Grundannahme, daß die Korrekturmatrix $\|K\|$, angewendet auf die mit dem Sekundär-Colorimeter am im wesentlichen fabrikneuen Farbmonitor gewonnenen Meßwerte der ersten, zweiten und dritten Primärvalenz die im Speicher des Farbmonitors abgespeicherten Referenz-Meßwerte aus der Referenz-Messung der ersten, zweiten beziehungsweise dritten Primärvalenz reproduzieren muss, folgt:

$$\begin{bmatrix} X_{S1} \\ Y_{S1} \\ Z_{S1} \end{bmatrix} = \begin{bmatrix} K_{11} & K_{12} & K_{13} \\ K_{21} & K_{22} & K_{23} \\ K_{31} & K_{32} & K_{33} \end{bmatrix} * \begin{bmatrix} X_{M1} \\ Y_{M1} \\ Z_{M1} \end{bmatrix} \tag{2a}$$

$$\begin{bmatrix} X_{S2} \\ Y_{S2} \\ Z_{S2} \end{bmatrix} = \begin{bmatrix} K_{11} & K_{12} & K_{13} \\ K_{21} & K_{22} & K_{23} \\ K_{31} & K_{32} & K_{33} \end{bmatrix} * \begin{bmatrix} X_{M2} \\ Y_{M2} \\ Z_{M2} \end{bmatrix} \tag{2b}$$

$$\begin{bmatrix} X_{S3} \\ Y_{S3} \\ Z_{S3} \end{bmatrix} = \begin{bmatrix} K_{11} & K_{12} & K_{13} \\ K_{21} & K_{22} & K_{23} \\ K_{31} & K_{32} & K_{33} \end{bmatrix} * \begin{bmatrix} X_{M3} \\ Y_{M3} \\ Z_{M3} \end{bmatrix} \tag{2c}$$

Erfindungsgemäß ist die Korrekturmatrix $\|K\|$ aus den Gleichungen (2a), (2b) und (2c) für jede Paarung aus im wesentlichen fabrikneuem individuellem Farbmonitor und Sekundär-Colorimeter numerisch zu ermitteln und zusammen mit einer geeigneten Kennung des Farbmonitors, beispielsweise einer Geräteseriennummer des Farbmonitors, in einer Speichervorrichtung des Sekundär-Colorimeters abzuspeichern. Zu diesem Zweck erhält man durch Umformen aus den Gleichungen (2a), (2b), (2c):

$$\begin{bmatrix} K_{11} \\ K_{12} \\ K_{13} \end{bmatrix} = \begin{bmatrix} X_{M1} & Y_{M1} & Z_{M1} \\ X_{M2} & Y_{M2} & Z_{M2} \\ X_{M3} & Y_{M3} & Z_{M3} \end{bmatrix}^{-1} * \begin{bmatrix} X_{S1} \\ X_{S2} \\ X_{S3} \end{bmatrix} \tag{3a}$$

$$\begin{bmatrix} K_{21} \\ K_{22} \\ K_{23} \end{bmatrix} = \begin{bmatrix} X_{M1} & Y_{M1} & Z_{M1} \\ X_{M2} & Y_{M2} & Z_{M2} \\ X_{M3} & Y_{M3} & Z_{M3} \end{bmatrix}^{-1} * \begin{bmatrix} Y_{S1} \\ Y_{S2} \\ Y_{S3} \end{bmatrix} \tag{3b}$$

$$\begin{bmatrix} K_{31} \\ K_{32} \\ K_{33} \end{bmatrix} = \begin{bmatrix} X_{M1} & Y_{M1} & Z_{M1} \\ X_{M2} & Y_{M2} & Z_{M2} \\ X_{M3} & Y_{M3} & Z_{M3} \end{bmatrix}^{-1} * \begin{bmatrix} Z_{S1} \\ Z_{S2} \\ Z_{S3} \end{bmatrix} \tag{3c}$$

Es gelten desweiteren auch die folgenden Notationen:

$$\begin{bmatrix} X_{MK1} \\ Y_{MK1} \\ Z_{MK1} \end{bmatrix}$$     Korrigierter Meßwert aus Messung der ersten Primärvalenz (z.B. Rot) mit Sekundär-Colorimeter, dargestellt im XYZ-System

$$\begin{bmatrix} X_{MK2} \\ Y_{MK2} \\ Z_{MK2} \end{bmatrix}$$     Korrigierter Meßwert aus Messung der zweiten Primärvalenz (z.B. Grün) mit Sekundär-Colorimeter, dargestellt im XYZ-System

$$\begin{bmatrix} X_{MK3} \\ Y_{MK3} \\ Z_{MK3} \end{bmatrix}$$     Korrigierter Meßwert aus Messung der dritten Primärvalenz (z.B. Blau) mit Sekundär-Colorimeter, dargestellt im XYZ-System

$$\begin{bmatrix} X_{MR1} \\ Y_{MR1} \\ Z_{MR1} \end{bmatrix}$$     Unkorrigierter (Roh-)Meßwert aus Messung der ersten Primärvalenz (z.B. Rot) mit Sekundär-Colorimeter, dargestellt im XYZ-System

$$\begin{bmatrix} X_{MR2} \\ Y_{MR2} \\ Z_{MR2} \end{bmatrix}$$     Unkorrigierter (Roh-)Meßwert aus Messung der zweiten Primärvalenz (z.B. Grün) mit Sekundär-Colorimeter, dargestellt im XYZ-System

$$\begin{bmatrix} X_{MR3} \\ Y_{MR3} \\ Z_{MR3} \end{bmatrix}$$     Unkorrigierter (Roh-)Meßwert aus Messung der dritten Primärvalenz (z.B. Blau) mit Sekundär-Colorimeter, dargestellt im XYZ-System

# EP 2 120 027 A1

Um die Veränderung der Farbwiedergabecharakteristika des Farbmonitors über die Zeit hinweg zu verfolgen, können dann mit dem Sekundär-Colorimeter von Zeit zu Zeit Messungen an dem Farbmonitor durchgeführt werden, die wie folgt unter Verwendung der individuell für den Farbmonitor gespeicherten Korrekturmatrix $\|K\|$ korrigiert werden:

$$\begin{bmatrix} X_{MK1} \\ Y_{MK1} \\ Z_{MK1} \end{bmatrix} = \begin{bmatrix} K_{11} & K_{12} & K_{13} \\ K_{21} & K_{22} & K_{23} \\ K_{31} & K_{32} & K_{33} \end{bmatrix} * \begin{bmatrix} X_{MR1} \\ Y_{MR1} \\ Z_{MR1} \end{bmatrix} \qquad (4a)$$

$$\begin{bmatrix} X_{MK2} \\ Y_{MK2} \\ Z_{MK2} \end{bmatrix} = \begin{bmatrix} K_{11} & K_{12} & K_{13} \\ K_{21} & K_{22} & K_{23} \\ K_{31} & K_{32} & K_{33} \end{bmatrix} * \begin{bmatrix} X_{MR2} \\ Y_{MR2} \\ Z_{MR2} \end{bmatrix} \qquad (4b)$$

$$\begin{bmatrix} X_{MK3} \\ Y_{MK3} \\ Z_{MK3} \end{bmatrix} = \begin{bmatrix} K_{11} & K_{12} & K_{13} \\ K_{21} & K_{22} & K_{23} \\ K_{31} & K_{32} & K_{33} \end{bmatrix} * \begin{bmatrix} X_{MR3} \\ Y_{MR3} \\ Z_{MR3} \end{bmatrix} \qquad (4c)$$

Das erfindungsgemäße Verfahren zum Kalibrieren eines Colorimeters kann insbesondere auch in Form eines entsprechend programmierten Rechners implementiert werden, der mit einer entsprechenden Messgeräte-Peripherie ausgestattet ist.

Bei einer komfortablen Weiteretwicklung der Erfindung kann insbesondere vorgesehen werden, eine Vielzahl von Korrekturmatrizen $\|K\|$ zusammen mit den Hersteller-Seriennummern der entsprechenden Farbmonitore in einem hinreiched groß dimensionierten Speicher abzulegen. Insoweit Hersteller von Farbmonitoren das elektronische Auslesen der Hersteller-Seriennummer von Farbmonitoren vorsehen, kann es vorteilhaft sein, ein automatisches Suchverfahren vorzusehen, bei dem der Benutzer das Sekundär-Colorimeter einfach mit dem Farbmonitor verbindet und daraufhin automatisch die dazugehörende Korrekturmatrix $\|K\|$ aufgesucht und aktiviert wird. Fehlt eine entsprechende Korrekturmatrix $\|K\|$ , so wird ein Fehlersignal oder eine Fehlermeldung ausgegeben.

Ein kritischer Punkt bei der Implementation der erfindungsgemäßen Lösung besteht darin, dass die Korrekturmatrix $\|K\|$ an einem im wesentlichen fabrikneuen Farbmonitor ermittelt werden muß. Die genaue Bedeutung des Begriffes "im wesentlichen fabrikneu" bemißt sich fachmännisch in Relation zu der Alterungsgeschwindigkeit des jeweiligen Display-Systems des Farbmonitors und kann daher nicht allgemeingültig festgelegt werden. Jedenfalls muß die Betriebsdauer des Farbmonitors zum Zeitpunkt der Bestimmung der Korrekturmatrix $\|K\|$ klein sein gegenüber der erwarteten Gerätelebensdauer, beispielsweise festgelegt durch den Zeitpunkt, an dem der Farbmonitor nur noch 50% seiner nominellen Leuchtleistung erbringt. Je nach der gewünschten Genauigkeit bei der Bestimmung der Korrekturmatrix $\|K\|$ wird eine Betriebsdauer von unter 1% und bevorzugterweise unter 0,1 % der erwarteten Lebensdauer zweckmäßig sein. In der Praxis sind bei den meisten handelsüblichen Farbmonitor-Geräten Betriebsdauern von einigen Stunden bis zu wenigen Tagen bei der Bestimmung der Korrekturmatrix $\|K\|$ in aller Regel unbedenklich.

Der Farbmonitor kann optional mit einer EDID-Schnittstelle ausgerüstet sein.

Die vorstehende Darstellung eines Ausführungsbeispieles in Gestalt eines CRT- oder LCD-Farbmonitors läßt sich auch entsprechend auf einen Farbprojektor übertragen.

**Patentansprüche**

1. Verfahren zum Kalibrieren eines ersten Colorimeters für die Messung eines Satzes von Farbwiedergabekennwerten eines Farbmonitors oder Farbprojektors,

   a) wobei der Farbmonitor oder Farbprojektor eine Speichereinrichtung zum Speichern mindestens eines Initialsatzes von Farbwiedergabekennwerten und zum Speichern einer eindeutigen Farbmonitor- oder Farbprojektoridentifikation umfaßt;

b) wobei das erste Colorimeter eine Speichereinrichtung zum Speichern mindestens einer eindeutigen Farbmonitor- oder Farbprojektoridentifikation und mindestens eines zugehörigen Satzes von Kalibrationskorrekturparametern umfaßt;

mit folgenden Schritten:

c) Festlegen einer ein eines Farbmonitor- oder Farbprojektor- Einzelgerät identifizierenden eindeutigen Farbmonitor- oder Farbprojektoridentifikation und meßtechnisches Bestimmen des Initialsatzes von Farbwiedergabekennwerten am im wesentlichen fabrikneuen Farbmonitor oder Farbprojektor bei einer vorbestimmten Farbansteuerung unter Verwendung eines zweiten Colorimeters;

d) Speichern der eindeutigen Farbmonitor- oder Farbprojektoridentifikation und des Initialsatzes von Farbwiedergabekennwerten in der Speichereinrichtung des Farbmonitors oder Farbprojektors,

e) meßtechnisches Bestimmen des Satzes von Farbwiedergabekennwerten am im wesentlichen fabrikneuen Farbmonitor oder Farbprojektor unter Verwendung des ersten Colorimeters bei gleicher Farbansteuerung;

f) Auslesen der eindeutigen Farbmonitor- oder Farbprojektoridentifikation und des Initialsatzes von Farbwiedergabekennwerten aus der Speichereinrichtung des Farbmonitors oder Farbprojektors durch das erste Colorimeter,

g) Vergleichen des am im wesentlichen fabrikneuen Farbmonitor oder Farbprojektor unter Verwendung des ersten Colorimeters meßtechnisch bestimmten Satzes von Farbwiedergabekennwerten mit dem Initialsatz von Farbwiedergabekennwerten aus der Speichereinrichtung des Farbmonitors oder Farbprojektors und Bestimmen eines Satzes von Kalibrationskorrekturparametern für das erste Colorimeter, wobei der Satz von Kalibrationskorrekturparametern den am im wesentlichen fabrikneuen Farbmonitor oder Farbprojektor unter Verwendung des ersten Colorimeters meßtechnisch bestimmten Satz von Farbwiedergabekennwerten in den Initialsatz von Farbwiedergabekennwerten aus der Speichereinrichtung des Farbmonitors oder Farbprojektors zu transformieren vermag;

h) Speichern der eindeutigen Farbmonitor- oder Farbprojektoridentifikation aus der Speichereinrichtung des Farbmonitors oder Farbprojektors und des zugehörigen Satzes von Kalibrationskorrekturparametern für das erste Colorimeter in der Speichereinrichtung des ersten Colorimeters.

2. Verfahren nach Anspruch 1, **dadurch gekennzeichnet, daß** der Schritt des Auslesens der eindeutigen Farbmonitor- oder Farbprojektoridentifikation und des Initialsatzes von Farbwiedergabekennwerten aus der Speichereinrichtung des Farbmonitors oder Farbprojektors durch das erste Colorimeter über eine elektronische Datenschnittstelle abgewickelt wird, mit der der Farbmonitor oder Farbprojektor einerseits und das erste Colorimeter andererseits miteinander koppelbar sind

3. Verfahren nach Anspruch 2, **dadurch gekennzeichnet, daß** in der Speichereinrichtung des Farbmonitors oder Farbprojektors ein Betriebsstundenwert gespeichert ist, wobei das Verfahren folgenden zusätzlichen Schritt umfaßt:

Auslesen des in der Speichereinrichtung des Farbmonitors oder Farbprojektors gespeicherten Betriebsstundenwertes über die elektronische Datenschnittstelle und Vergleichen des ausgelesenen Betriebsstundenwertes mit einem vorgegebenen Betriebsstundenschwellenwert, wobei das Bestimmen eines Satzes von Kalibrationskorrekturparametern für das erste Colorimeter nicht durchgeführt wird, wenn der ausgelesenene Betriebsstundenwertes größer ist als der vorgegebene Betriebsstundenschwellenwert.

4. Verfahren nach Anspruch 2 oder 3, **gekennzeichnet durch** folgenden Schritt:

Falls in der Speichereinrichtung des ersten Colorimeters mehrere Instanzen einer eindeutigen Farbmonitor- oder Farbprojektoridentifikation und jeweils zugehöriger Sätze von Kalibrationskorrekturparametern gespeichert sind, automatisches Durchsuchen der Speichereinrichtung des ersten Colorimeters nach der aus der Speichereinrichtung des Farbmonitors oder Farbprojektors **durch** das erste Colorimeter ausgelsesenen eindeutigen Farbmonitor- oder Farbprojektoridentifikation und Verwenden des dazugehörigen Satzes von Kalibrationskorrekturparametern zur Korrektur von Meßwerten einer Messung eines Satzes von Farbwiedergabekennwerten eines Farbmonitors oder Farbprojektors.

5. Verfahren nach einem der vorhergehenden Ansprüche, wobei der Satz von Kalibrationskorrekturparametern eine Korrekturmatrix $\|K\|$ ist.

6. Verfahren zum Kalibrieren eines Colorimeters für die Messung eines Satzes von Farbwiedergabekennwerten eines Farbmonitors oder Farbprojektors,

a) wobei der Farbmonitor oder Farbprojektor eine Speichereinrichtung aufweist, in welcher mindestens folgende Daten gespeichert sind:

- ein am fabrikneuen Farbmonitor oder Farbprojektor bei einer vorbestimmten Farbansteuerung werksseitig meßtechnisch bestimmter Initialsatz von Farbwiedergabekennwerten, und
- eine das Einzelgerät identifizierende eindeutige Farbmonitor- oder Farbprojektoridentifikation,

b) wobei das Colorimeter eine Speichereinrichtung zum Speichern mindestens einer eindeutigen Farbmonitor- oder Farbprojektoridentifikation und mindestens eines zugehörigen Satzes von Kalibrationskorrekturparametern umfaßt; mit folgenden Schritten:

c) meßtechnisches Bestimmen des Satzes von Farbwiedergabekennwerten am im wesentlichen fabrikneuen Farbmonitor oder Farbprojektor unter Verwendung des Colorimeters bei gleicher Farbansteuerung;

d) Auslesen der eindeutigen Farbmonitor- oder Farbprojektoridentifikation und des Initialsatzes von Farbwiedergabekennwerten aus der Speichereinrichtung des Farbmonitors oder Farbprojektors,

e) Vergleichen des am im wesentlichen fabrikneuen Farbmonitor oder Farbprojektor unter Verwendung des Colorimeters meßtechnisch bestimmten Satzes von Farbwiedergabekennwerten mit dem Initialsatz von Farbwiedergabekennwerten aus der Speichereinrichtung des Farbmonitors oder Farbprojektors und bestimmen eines Satzes von Kalibrationskorrekturparametern für das Colorimeter, wobei der Satz von Kalibrationskorrekturparametern den am im wesentlichen fabrikneuen Farbmonitor oder Farbprojektor unter Verwendung des Colorimeters meßtechnisch bestimmten Satz von Farbwiedergabekennwerten in den Initialsatz von Farbwiedergabekennwerten aus der Speichereinrichtung des Farbmonitors oder Farbprojektors zu transformieren vermag;

f) Speichern der eindeutigen Farbmonitor- oder Farbprojektoridentifikation aus der Speichereinrichtung des Farbmonitors oder Farbprojektors und des zugehörigen Satzes von Kalibrationskorrekturparametern für das Colorimeter in der Speichereinrichtung des Colorimeters.

7. Verfahren nach Anspruch 6, **dadurch gekennzeichnet, daß** der Schritt des Auslesens der eindeutigen Farbmonitor- oder Farbprojektoridentifikation und des Initialsatzes von Farbwiedergabekennwerten aus der Speichereinrichtung des Farbmonitors oder Farbprojektors durch das Colorimeter über eine elektronische Datenschnittstelle abgewickelt wird, mit der der Farbmonitor oder Farbprojektor einerseits und das Colorimeter andererseits miteinander koppelbar sind

8. Verfahren nach Anspruch 7, **dadurch gekennzeichnet, daß** in der Speichereinrichtung des Farbmonitors oder Farbprojektors ein Betriebsstundenwert gespeichert ist, wobei das Verfahren folgenden zusätzlichen Schritt umfaßt:

Auslesen des in der Speichereinrichtung des Farbmonitors oder Farbprojektors gespeicherten Betriebsstundenwertes über die elektronische Datenschnittstelle und Vergleichen des ausgelesenen Betriebsstundenwertes mit einem vorgegebenen Betriebsstundenschwellenwert, wobei das Bestimmen eines Satzes von Kalibrationskorrekturparametern für das Colorimeter nicht durchgeführt wird, wenn der ausgelesenene Betriebsstundenwertes größer ist als der vorgegebene Betriebsstundenschwellenwert.

9. Verfahren nach Anspruch 7 oder 8, **gekennzeichnet durch** folgenden Schritt:

Falls in der Speichereinrichtung des Colorimeters mehrere Instanzen einer eindeutigen Farbmonitor- oder Farbprojektoridentifikation und jeweils zugehöriger Sätze von Kalibrationskorrekturparametern gespeichert sind, automatisches Durchsuchen der Speichereinrichtung des Colorimeters nach der aus der Speichereinrichtung des Farbmonitors oder Farbprojektors **durch** das Colorimeter ausgelesenen eindeutigen Farbmonitor- oder Farbprojektoridentifikation und Verwenden des dazugehörigen Satzes von Kalibrationskorrekturparametern zur Korrektur von Meßwerten einer Messung eines Satzes von Farbwiedergabekennwerten eines Farbmonitors oder Farbprojektors.

10. Verfahren nach einem der Ansprüche 6 bis 9, wobei der Satz von Kalibrationskorrekturparametern eine Korrekturmatrix $\|K\|$ ist.

11. Computerprogrammprodukt mit auf einem Computer ausführbaren Instruktionen, wobei die Instruktionen ein Verfahren gemäß einem der vorstehenden Ansprüche bewirken, wenn sie in einen Computer geladen und ausgeführt werden.

12. Datenträger mit darauf aufgezeichnetem Computerprogrammprodukt nach Anspruch 11.

13. Colorimeter, eingerichtet als erstes Colorimeter zum Durchführen eines Kalibrierungsverfahrens nach einem der Ansprüche 1-12.

14. Colorimeter, umfassend

a) eine Schnittstelle zum Anschluß eines Farbmonitors oder Farbprojektors, der eine Monitor-Speichereinrichtung aufweist, in welcher mindestens folgende Daten gespeichert sind:

- ein am fabrikneuen Farbmonitor oder Farbprojektorwerksseitig meßtechnisch bestimmter Initialsatz von Farbwiedergabekennwerten, und
- eine das Einzelgerät identifizierende eindeutige Farbmonitor- oder Farbprojektoridentifikation,

b) eine Messeinrichtung zum meßtechnischen Bestimmen eines Satzes von Farbwiedergaberohkennwerten am Farbmonitor oder Farbprojektor,
c) eine Colorimeter-Speichervorrichtung zum Speichern mindestens einer eindeutigen Farbmonitor- oder Farbprojektoridentifikation und minestens eines zugehörigen Satzes von Kalibrationskorrekturparametern,
d) eine Kalibriereinrichtung zum meßtechnisches Bestimmen eines Satzes von Farbwiedergabekennwerten gemessen am im wesentlichen fabrikneuen Farbmonitor oder Farbprojektor, zum Auslesen der eindeutigen Farbmonitor- oder Farbprojektoridentifikation und des Initialsatzes von Farbwiedergabekennwerten aus dem Speichereinrichtung des Farbmonitors oder Farbprojektors, zum Vergleichen des am im wesentlichen fabrikneuen Farbmonitor oder Farbprojektor meßtechnisch bestimmten Satzes von Farbwiedergabekennwerten mit dem Initialsatz von Farbwiedergabekennwerten aus dem Speichereinrichtung des Farbmonitors oder Farbprojektors und Bestimmen eines Satzes von Kalibrationskorrekturparametern, wobei der Satz von Kalibrationskorrekturparametern den am im wesentlichen fabrikneuen Farbmonitor oder Farbprojektor meßtechnisch bestimmten Satz von Farbwiedergabekennwerten in den Initialsatz von Farbwiedergabekennwerten aus dem Speichereinrichtung des Farbmonitors oder Farbprojektors zu transformieren vermag, sowie zum Speichern der eindeutigen Farbmonitor- oder Farbprojektoridentifikation aus dem Speichereinrichtung des Farbmonitors oder Farbprojektors und des zugehörigen Satzes von Kalibrationskorrekturparametern in der Colorimeter-Speichereinrichtung, und
e) eine Korrektureinrichtung zum Bestimmen eines korrigierten Satzes von Farbwiedergabekennwerten aus dem Satz von Farbwiedergaberohkennwerten durch Transformieren des Satzes von Farbwiedergaberohkennwerten unter Verwendung des Satzes von Kalibrationskorrekturparametern aus der Speichereinrichtung.

15. Colorimeter nach Anspruch 14, wobei der Satz von Kalibrationskorrekturparametern eine Korrekturmatrix $\|K\|$ ist.

EP 2 120 027 A1

**EUROPÄISCHER RECHERCHENBERICHT**

Europäisches Patentamt
European Patent Office
Office européen des brevets

Nummer der Anmeldung

EP 09 00 6582

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 5 892 585 A (LIANZA THOMAS A [US] ET AL) 6. April 1999 (1999-04-06) <br> * Spalte 3, Zeile 36 - Zeile 47 * <br> * Spalte 10, Zeile 22 - Spalte 11, Zeile 6 * <br> * Abbildungen 10,11 * | 1,2,5-7, 10-15 | INV. <br> G01J3/50 <br> G01J3/52 |
| Y | ----- | 4,9 | |
| X | US 2007/242064 A1 (KUO CHIH-CHIA [TW]) 18. Oktober 2007 (2007-10-18) <br> * Absatz [0006] - Absatz [0008] * <br> * Absatz [0043] - Absatz [0051] * <br> * Abbildungen 5-9 * | 1-3,5-8, 10-15 | |
| X | ----- <br> US 6 654 493 B1 (HILLIARD WILLIAM J [US] ET AL) 25. November 2003 (2003-11-25) <br> * das ganze Dokument * | 1,2,6,7, 11-14 | |
| Y | ----- <br> WO 2006/089556 A (BANG & OLUFSEN AS [DK]; DALGAARD TORBEN [DK]) 31. August 2006 (2006-08-31) <br> * Seite 3, Zeile 19 - Seite 4, Zeile 18 * <br> * Abbildung 3 * | 4,9 | RECHERCHIERTE SACHGEBIETE (IPC) |
| A | ----- | 1,6,11, 13,14 | G01J <br> H04N <br> G09G |

Der vorliegende Recherchenbericht wurde für alle Patentansprüche erstellt

| Recherchenort | Abschlußdatum der Recherche | Prüfer |
|---|---|---|
| München | 6. August 2009 | Haller, Mirjam |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

EPO FORM 1503 03.82 (P04C03)

11

**ANHANG ZUM EUROPÄISCHEN RECHERCHENBERICHT**
**ÜBER DIE EUROPÄISCHE PATENTANMELDUNG NR.**

EP 09 00 6582

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

06-08-2009

| Im Recherchenbericht angeführtes Patentdokument | Datum der Veröffentlichung | Mitglied(er) der Patentfamilie | Datum der Veröffentlichung |
|---|---|---|---|
| US 5892585 A | 06-04-1999 | KEINE | |
| US 2007242064 A1 | 18-10-2007 | TW 280409 B | 01-05-2007 |
| US 6654493 B1 | 25-11-2003 | KEINE | |
| WO 2006089556 A | 31-08-2006 | EP 1905249 A1<br>US 2009009607 A1 | 02-04-2008<br>08-01-2009 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6816262 B1

**In der Beschreibung aufgeführte Nicht-Patentliteratur**

- **veröffentlicht.** Proceedings of SPIE -- Volume 2658, Color Imaging: Device-Independent Color, Color Hard Copy, and Graphic Arts. Marz 1996, vol. 2658, 161-181